Europäisches Patentamt

European Patent Office

Office européen des brevets

(11) Numéro de publication : **0 449 745 A1**

# (12) DEMANDE DE BREVET EUROPEEN

(21) Numéro de dépôt : 91420052.2

(22) Date de dépôt : 18.02.91

(51) Int. Cl.⁵ : **B29C 71/04, B29C 71/00, B29C 35/08, // B29K67:00**

(30) Priorité : 08.03.90 FR 9003216

(43) Date de publication de la demande :
02.10.91 Bulletin 91/40

(84) Etats contractants désignés :
**BE CH DE ES GB IT LI SE**

(71) Demandeur : **MERLIN GERIN**
**2, chemin des Sources**
**F-38240 Meylan (FR)**

(72) Inventeur : **Boddele, Dominique**
**Merlin Gerin - Sce. Brevets**
**F-38050 Grenoble Cédex (FR)**
Inventeur : **Laude, Etienne**
**Merlin Gerin - Sce. Brevets**
**F-38050 Grenoble Cédex (FR)**

(74) Mandataire : **Kern, Paul et al**
**Merlin Gerin Sce. Brevets**
**F-38050 Grenoble Cédex (FR)**

(54) Procédé et dispositif de traitement local d'une pièce en un matériau polymère par un faisceau laser excimère.

(57) Une pièce en un matériau polymère est soumise localement à un faisceau laser excimère, provoquant ou accroissant la crsitallisation du matériau et par la suite sa réticulation.Les zones traitées présentent des propriétés mécaniques et thermomécaniques améliorées. Un recuit engendre une postcristallisation.

Fig. 2

EP 0 449 745 A1

## PROCEDE ET DISPOSITIF DE TRAITEMENT LOCAL D'UNE PIECE EN UN MATERIAU POLYMERE PAR UN FAISCEAU LASER EXCIMERE

L'invention est relative à un procédé de renforcement local des propriétés mécaniques et thermomécaniques d'une pièce en un matériau polymère, amorphe ou partiellement cristallisé.

L'utilisation de matières plastiques variées et de plus en plus performantes, en général des polymères renforcés ou non, gagne tous les domaines industriels à mesure que les procédés de fabrication de tels matériaux sont mis au point.

Le développement de ces procédés a pour objectif de permettre la fabrication de structures polymériques stables, c'est à dire inertes aux agents chimiques habituels à température ambiante et pendant des périodes de temps relativement très grandes, et résistantes à des sollicitations mécaniques ou thermomécaniques prolongées.

La tendance consiste en général à substituer à des pièces métalliques usinées mécaniquement des pièces en plastique moulées, plus légères et non corrodables. D'autre part, ces pièces peuvent, pour certaines applications être soumises à des conditions d'utilisation critiques, telles que des hautes températures pendant des temps plus ou moins longs, tractions ou flexions mécaniques, fluages. Il est évident que ces applications restent limitées par les performances des matériaux transformés, par injection, compression ou soufflage pour les pièces massives ou par extrusion pour les films. Enfin, les formes géométriques de ces pièces sont très souvent complexes. Si l'usage des polymères permet de fabriquer de telles pièces par moulage direct dans les matrices appropriées, il n'en reste pas moins vrai que les procédés suscités ne permettent pas en général d'assurer une bonne homogénéité du matériau transformé et de donner à ce matériau une texture intégrée permettant une meilleure résistance mécanique dans les zones d'efforts de la pièce.

Différents moyens permettant d'améliorer les performances des polymères moulés ont déjà été proposés: par exemple en modifiant la composition du mélange de basé par adjonction d'agents de cristallisation ou en optimisant les paramètres de moulage, ou en optimisant la résistance des pièces par une modification du dessin des pièces.

Ces méthodes mises en pratique concernent toutes un traitement total de ces pièces ou films polymèriques, en milieu isotherme sans gradient de température, temps ou espace qui permettraient de différencier telle ou telle partie de la pièce pratiquée.

Si ces pièces sont fortement anisotropes (profil géométrique complexe), leur traitement réalisé après transformation devrait être aussi anisotrope et épouser au plus près le profil géométrique des pièces, en particulier en maintenant sur toute la surface la même structure microscopique du matériau polymère qui peut être amorphe, cristalline ou réticulée.

La présente invention a pour objet un procédé qui permet d'améliorer sensiblement les propriétés mécaniques et thermomécaniques de pièces en matériaux plastiques, notamment moulés, aux endroits où ces pièces nécessitent un renforcement du fait d'un défaut de fabrication ou de l'application de contraintes importantes lors de leur utilisation.

Le procédé selon l'invention est caractérisé en ce que la zone à renforcer est exposée à l'action d'un faisceau laser excimère, ayant une longueur d'onde qui assure un bon couplage optique avec le matériau, pendant une durée et énergie suffisantes pour améliorer la cristallisation et/ou la réticulation du matériau, et insuffisantes à une destruction du matériau.

Le traitement par laser excimère provoque une cristallisation puis une réticulation de matériaux amorphes ou une réticulation de matériaux déjà cristallisés après augmentation de leur taux de cristallinité.

Le traitement localisé par laser excimère de pièces transformées finies, permet une amélioration de la cohésion de la structure microscopique dans la zone traitée du matériau polymère et ainsi de permettre une meilleure résistance mécanique. La localisation des traitements est obtenue en utilisant un faisceau laser excimère dont la longueur d'onde est choisie pour permettre un meilleur couplage optique avec le matériau et une meilleure absorption du faisceau. Par exemple: pour une pièce en polyamide ayant une longueur d'onde d'absorption de 220nm environ, on peut utiliser un laser à 190nm ou d'une longueur d'onde voisine; pour une pièce en polyéthylènetéraphtalate ayant une longueur d'onde d'absorption de 310nm, on peut utiliser un laser excimère à 248nm ou une longueur d'onde voisine.

Contrairement au laser YAG ou à CO2, qui par un apport d'énergie ponctuel détruit localement le matériau, le laser excimère agit sur la structure du matériau sans destruction de celui-ci, à condition bien entendu de limiter la durée ou l'intensité de l'exposition. Des essais ont montré qu'un nombre de pulses compris entre 60 et 150, chaque pulse ayant une durée de quelques nanosecondes, par exemple de 20, donne de bons résultats.

L'invention concerne également un dispositif de traitement et les pièces moulées traitées selon le procédé inventif. De telles pièces de structures hybrides, allient les avantages des pièces plastiques, notamment de résistance aux chocs et des pièces à résistance mécanique élevée.Un bras porte contact d'un appareil électrique, réalisé selon ce procédé, résiste aux chocs d'ouverture et de fermeture de l'appareil grâce à sa plasticité, tandis que les parties soumises à un frottement ou à une contrainte mécanique sont renforcées par une réticulation du matériau par le traitement au laser excimère.

Le processus d'action du faisceau laser excimère, par exemple d'une durée de pulse de 20ns, n'est qu'accessoirement thermique, l'action principale étant la modification de structure du matériau.Le traitement laser semble engendrer un rapprochement des chaînes macromoléculaires puis des interactions entre chaînes (forces de Vander Walls, liaisons hydrogène), puis un rapprochement plus fort qui peut s'apparenter aux molécules excimères déjà observées en chimie organique, puis enfin un passage à la liaison covalente et à la réticulation à partir des zones préalablement organisées par l'effet du traitement laser excimère.

La pièce traitée peut subir des traitements additionnels, notamment un traitement thermique de recuit, susceptible d'engendrer une postcristallisation et un renforcement supplémentaire. La pièce peut bien entendu comporter les charges usuelles,par exemple de fibres de verre.De multiples essais ont confirmé l'amélioration des propriétés mécaniques par le traitement par laser excimère et le résultat de certains essais est résumé dans les dessins annexés dans lesquels:

- la figure 1 représente les courbes d'allongement de différents matériaux en fonction du temps, l'allongement étant représenté en ordonnée et le temps en abscisse;
- la figure 2 est une vue schématique d'un dispositif de traitement d'une pièce dans le moule;
- la figure 3 représente les courbes de variation du taux de cristallinité d'un film de polyéthylènetéraphtalate biorienté en fonction du nombre de pulses.
- la figure 4 analogue à la figure 3 correspond à un autre matériau.

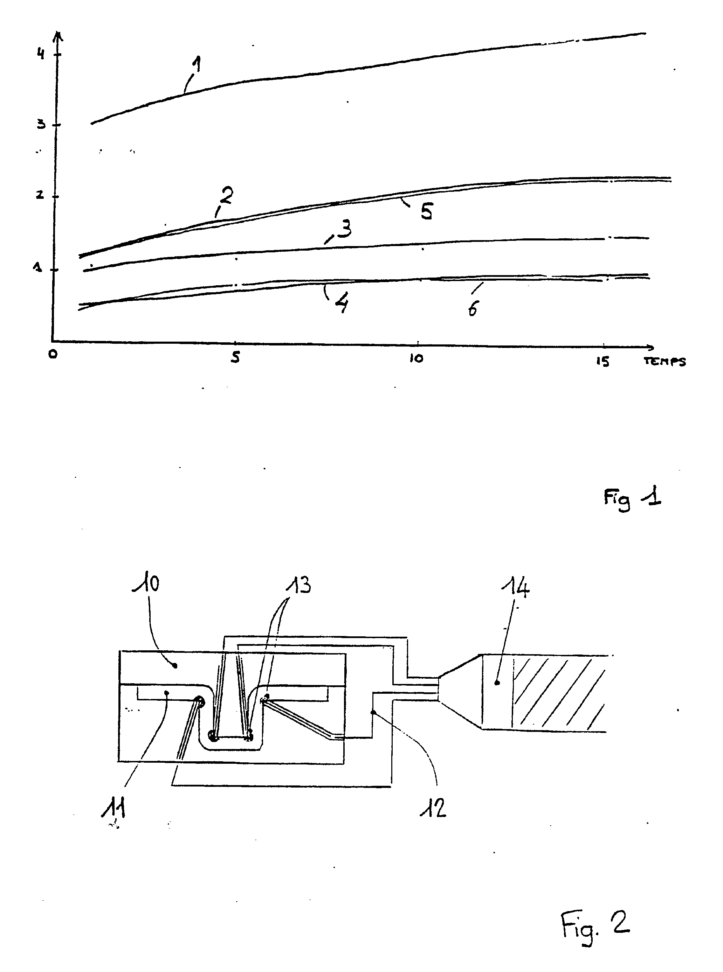

Sur la figure 1 et le tableau en fin de texte, on voit qu'un échantillon d'un polyéthylèneteraphtalate chargé à 50% de fibres de verre et dénommé commercialement AV2 390, non traité, présente un allongement variant de 3, après 1 heure d'application d'une force de 4,5Kg à une température de 200°, à 4,35 après 15 heures (courbe 1). Le même matériau ayant subi une postcristallisation par traitement thermique présente-des propriétés améliorées, l'allongement variant de 1,2 à 2,15 dans les mêmes conditions d'essais (courbe 2). Le traitement par laser excimère à 80 pulses réduit l'allongement à 1,15 après 1 heure et 1,50 après 15 heures (courbe 3). Lorsque de plus ce matériau, traité par laser subit un recuit, l'allongement ne varie plus que de 0,5 à 1 (courbe 4).

Sur la figure 1 est également représentée la courbe de variation AV2 390 traitée au laser excimère, 80 pulses, mais après le recuit (courbe 5). Les propriétés mécaniques ne sont pratiquement pas modifiées ce qui confirme l'hypothèse d'action du traitement laser sur une structure amorphe ou faiblement cristallisée et un effet quasi nul sur une structure déjà cristallisée.

La tableau reprend les résultats précités en faisant varier le nombre de pulses et on constate que les valeurs comprises entre 60 et 150 pulses sont les plus efficaces pour des échantillons recuits ou non recuits.

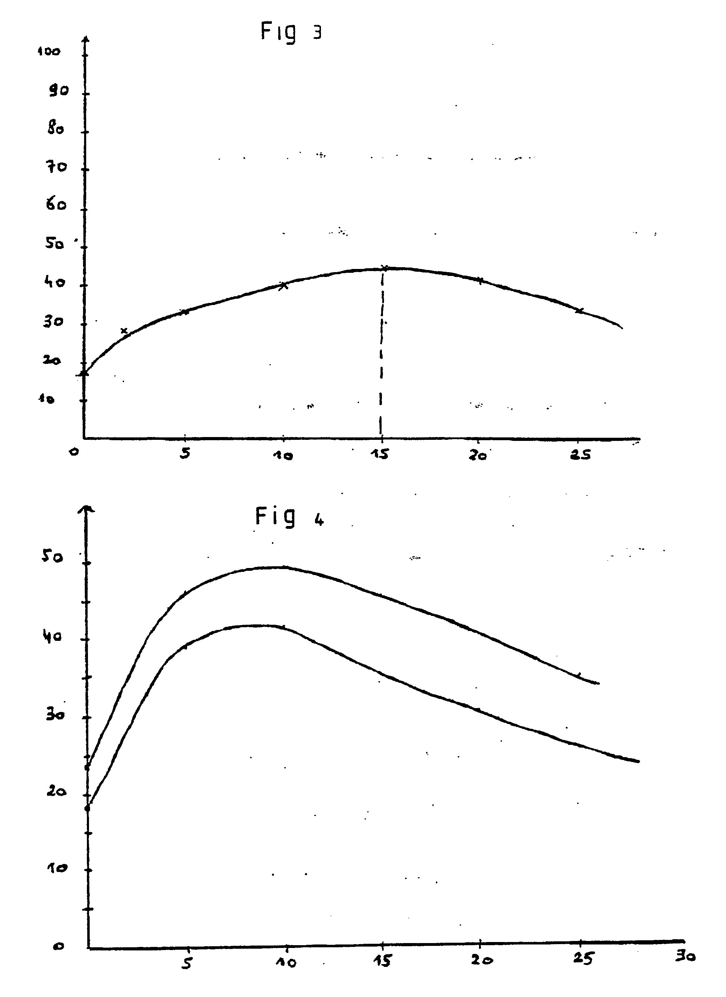

Les figures doivent être considérées comme étant intégrées dans la présente description et en se référant à la figure 1 on voit qu'un polysulfure de phénylène chargé de fibres de verre et dénommé Verton conduit sensiblement aux mêmes résultats (courbe 6). Les figures 3 et 4 illustrent la variation de taux de cristallinité en fonction du nombre de pulses du traitement laser excimère pour deux films différents de polyéthylènetéraphtalate et avec des énergies différentes. Ce taux croît au cours d'une première étape,ce qui confirme l'augmentation de la cristallisation, puis intervient une diminution après 10 pulses pour le matériau de la figure 3 et après 15 pulses pour le matériau de la figure 4. Cette diminution de la cristallinité correspond à la réticulation du matériau polymère.

En se référant à la figure 2 on voit un moule 10 de coulée d'une pièce 11 en forme de manivelle. Dans le moule 10 sont aménagés des conduits capillaires de logement de fibres optiques 12 aboutissant à l'intérieur du moule dans les zones 13 de la pièce devant être traitées en l'occurrrence aux angles de la pièce. Les extrémités opposées externes des fibres 12 sont exposées à un faisceau laser excimère 14.

Lors du refroidissement du polymère injecté à chaud, et donc fluide, dans son moule, des zones de contraintes sont créées aux angles de la pièce. Pour permettre une augmentation de la cristallisation dans ces zones et donc améliorer la tenue mécanique et thermomécanique et diminuer les tensions internes; un faisceau laser est injecté dans chacune des fibres et irradie la pièce moulée au cours de sa transformation. Celle-ci se trouve ainsi maintenue très localement à une température très élevée pendant des temps de l'ordre de quelques dixièmes de seconde, indépendamment de l'isotherme du moule lui-même qui permet,lui, un traitement homogène de la pièce.

Il est clair que le traitement selon l'invention par un faisceau laser excimère est applicable à tout matériau polymérique chargé ou non et de forme quelconque, et que la longueur d'onde du faisceau laser ainsi que la durée et l'intensité d'exposition doivent être adaptées au type de matériau. Ce choix peut résulter de simples essais. Lorsque la zone à traiter est trop grande pour être exposée à un seul faisceau, ce dernier peut balayer la zone ou plusieurs faisceaux peuvent être juxtaposés. La durée d'exposition est une fraction de seconde et le traitement peut facilement être intégré à une chaîne de fabrication, par exemple de pièces moulées d'appareillage électrique qui sont de préférence en matière isolante.

L'invention est bien entendu nullement limitée aux particularités décrites.

TABLEAU DE RESULTATS

| Matiere | Traitement | recuit | def. a 1 H | def. a 2,5 H | def. a 8 H | def. a 15H |
|---------|-----------|--------|-----------|--------------|------------|------------|
| $AV_2$390 | / | non | 3,00 | 3,3 | 3,85 | 4,35 |
| | 40 pulses | non | 2,8 | 3,02 | / | 3,80 |
| | 60 pulses | non | 2,10 | 2,55 | / | 3,20 |
| | 80 pulses | non | 1,15 | 1,25 | 1,40 | 1,50 |
| | 150 pulses | non | 1,80 | 2,10 | 2,35 | / |
| | 200 pulses | non | 2,95 | 3,23 | 3,65 | / |
| | / | oui | 1,20 | 1,43 | / | 2,15 |
| | 40 pulses | oui | 1,09 | 1,19 | / | 2,05 |
| | 60 pulses | oui | / | 0,76 | / | 1,30 |
| | 80 pulses | oui | 0,50 | 0,61 | / | 1 |
| | 150 pulses | oui | / | 1,40 | / | / |

**Revendications**

1. Procédé de renforcement local des propriétés mécaniques et thermomécaniques d'une pièce (11) en un matériau polymère, amorphe ou partiellement cristallisé, caractérisé en ce que la zone(13) à renforcer est exposée à l'action d'un faisceau laser excimère (14), ayant une longueur d'onde qui assure un bon couplage optique avec le matériau pendant une durée et énergie, suffisantes pour améliorer la cristallisation et/ou la réticulation du matériau, et insuffisantes à une destruction du matériau.

2. Procédé selon la revendication 1 de renforcement d'un matériau polyamide ayant une longueur d'onde d'absorption d'environ 220nm, caractérisé en ce que la longueur d'onde du faisceau laser est voisine de 190 nm.

3. Procédé selon la revendication 1 de renforcement d'un matériau polyéthylènetéraphtalate ayant un longueur d'onde d'absorption d'environ 310nm, caractérisé en ce que la longueur d'onde du faisceau laser est voisine de 248nm.

4. Procédé selon la revendication 1,2 ou 3, caractérisé en ce que le matériau traité au faisceau laser excimère est soumis par la suite à un traitement thermique de postcristallisation.

5. Procédé selon l'une quelconque des revendications précédentes, caractérisé en ce que le matériau est soumis à un nombre de pulses de laser excimère compris entre 60 et 150, la durée d'un pulse étant de l'ordre de 20ns.

6. Procédé selon la revendication 1,2 ,3, 4 ou 5, caractérisé en ce que le traitement local au faisceau laser excimère est réalisé dans le moule (10) de la pièce (11) en guidant les rayons laser (14) par des fibres optiques traversant le moule vers la zone de la pièce à traiter.

7. Procédé selon la revendication 6, caractérisé en ce que le traitement local est réalisé pendant la phase d'injection ou de polymérisation de la pièce (11).

8. Dispositif pour la mise en oeuvre du procédé selon la revendication 6 ou 7, caractérisé en ce qu'il comporte un moule (10) pour une pièce (11) en matériau polymère, des fibres optiques(12) traversant la paroi du moule pour guider des rayons laser (14) externes au moule vers l'intérieur et un laser excimère externe au moule dont le faisceau est guidé par les fibres optiques vers les zones (13)à traiter de la pièce moulée.

9. Pièce moulée en un matériau polymère, caractérisée en ce que les zones soumises à des contraintes mécaniques et/ou thermiques importantes sont traitées selon le procédé objet de l'une quelconque des revendications précédentes par exposition à un faisceau laser excimère.

10. Pièce moulée selon la revendication 9, caractérisée en ce que le matériau est un polyéthylèneteraphtalate chargé de fibres de verre.

Fig 1

Fig. 2

Fig 3

Fig 4

## RAPPORT DE RECHERCHE EUROPEENNE

Numero de la demande

EP 91 42 0052

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.5) |
| X | FR-A-2 599 640 (TURBOMECA) <br> * Ensemble du document * <br> --- | 1-5,9, 10 | B 29 C 71/04 <br> B 29 C 71/00 <br> B 29 C 35/08 // <br> B 29 K 67:00 |
| X | FR-A-2 089 139 (STEIGERWALD STRAHLTECHNIK) <br> * Page 5, lignes 4-11; revendications 1-5; fig. * <br> --- | 1-5,9, 10 | |
| X | EP-A-0 287 216 (MINNESOTA MINING AND MANUFACTURING) <br> * Ensemble du document et en particulier page 17, lignes 29-36; page 19, ligne 1 - page 20, ligne 16 * <br> --- | 1-5,9, 10 | |
| A | WO-A-8 605 085 (B. TOUATI) <br> * Ensemble du document * <br> --- | 6-8 | |
| A | EP-A-0 233 755 (AMOCO) <br> * Ensemble du document * <br> ----- | 2-5,10 | |
| | | | **DOMAINES TECHNIQUES RECHERCHES (Int. Cl.5)** |
| | | | B 29 C <br> A 61 C |

Le présent rapport a été établi pour toutes les revendications

| Lieu de la recherche | Date d'achèvement de la recherche | Examinateur |
|---|---|---|
| LA HAYE | 19-07-1991 | LABEEUW R.C.A. |